# EUROPEAN PATENT APPLICATION

(11) **EP 3 858 898 A1**
(43) Date of publication of application: **04.08.2021**
(21) Application number: 19865784.3
(22) Date of filing: 27.09.2019
(51) Int. Cl.: C08J 5/24, B29B 11/16, B29C 70/20, C08J 5/04, B29K 105/10

(54) **TAPE PREPREG, TAPE PREPREG DISPOSITION METHOD, FIBER-REINFORCEMENT COMPOSITE MATERIAL, FIBER-REINFORCEMENT COMPOSITE MATERIAL MANUFACTURING METHOD**

(30) Priority: 27.09.2018 JP 2018182019
(71) Applicant: Mitsubishi Chemical Corporation, Chiyoda-ku Tokyo 100-8251 (JP)
(72) Inventor: NOHARA Atsushi, Tokyo 100-8251 (JP)
(74) Representative: Hoffmann Eitle
(86) International application number: PCT/JP2019/038269
(87) International publication number: WO 2020/067478

(57) **Abstract**

A tape prepreg formed by impregnating, with a resin, a reinforcing fiber bundle in which reinforcing fibers are aligned in one direction, in which a cross-section of the tape prepreg perpendicular to an orientation direction has a portion in which a thickness continuously increases from one end portion and the other end portion in a width direction toward the center in the width direction, and all angles formed by any one boundary line in a thickness direction of the perpendicular cross-section and a boundary line in the width direction are acute angles.

## Description

### [Technical Field]

The present invention relates to a tape prepreg, a tape prepreg disposition method, a fiber-reinforcement composite material, and a fiber-reinforcement composite material manufacturing method.

### [Background Art]

Fiber-reinforcement composite materials formed of reinforcing fibers and a matrix resin are lightweight and have excellent mechanical properties and are thus widely used in aerospace applications, automobile applications, sports applications, various other industrial applications, and the like. Fiber-reinforcement composite materials are obtained mainly by heat-molding a prepreg for a fiber-reinforcement composite material, which is an intermediate material.

Prepregs are reinforcing fibers impregnated with a thermosetting resin or a thermoplastic resin. From the viewpoint of heat resistance and strength of the fiber-reinforcement composite material, a thermosetting resin is mainly used as the resin for the prepreg and, among these, epoxy resins are most often used from the viewpoint of obtaining a fiber-reinforcement composite material with excellent heat resistance, elastic modulus, low curing shrinkage, chemical resistance, and the like.

In particular, in aerospace applications, a prepreg called a tape prepreg disclosed in Patent Literature 1 is often used in order to efficiently mold large reinforced members having three-dimensional shapes. This is a prepreg in which a roll of prepreg is cut in the longitudinal direction to increase the aspect ratio. The tape prepreg is usually cut to a width of 1/4 inch (6.4 mm) to 6 inches (152 mm) and set in a laminating apparatus called an auto layup apparatus. In the laminating apparatus, a plurality of tape prepregs are spread on a mold surface having a desired shape so as to be adjacent to each other in the width direction to produce a laminate which is laminated and crimped so as to have a desired thickness in a desired fiber direction. Thereafter, the laminate is heat-cured using an autoclave, an oven, or the like to obtain the desired fiber-reinforcement composite material.

In this series of operations, when disposing the tape prepregs on the mold surface, gaps (intervals) are generated due to the width precision of the tape prepregs and these portions remain in a state of lacking fibers and resin even after heat-curing. Patent Literature 2 proposes a tape prepreg having a substantially rectangular cross-section and little variation in width. However, even if the cross-section is a rectangle, it is difficult in reality to completely eliminate variation in width to zero and it is difficult in practice to carry out spreading completely without intervals. Therefore, there is a problem in that it is difficult to develop a good appearance with no missing reinforcing fibers or resin and to develop strength according to calculations. In addition, there is a problem in that missing fibers are likely to occur.

### [Citation List]

### [Patent Literature]

[Patent Literature 1] Japanese Unexamined Patent Application, First Publication No. 2004-43653
[Patent Literature 2] Published Japanese Translation No. 2013-538264 of the PCT International Publication

### [Summary of Invention]

### [Technical Problem]

In order to spread tape prepregs having variations in width precision without intervals, a method in which end portions are purposely made to overlap by the amount of variation in width precision may be considered.

However, the method described above has a problem in that the thickness is increased in the overlapped portions only and it is difficult to finish the laminate to a uniform thickness.

The present invention provides a tape prepreg capable of providing a fiber-reinforcement composite material with excellent mechanical properties and excellent dimensional precision for the thickness thereof and in which missing fibers are reduced, a fiber-reinforcement composite material using the tape prepreg, and a method for manufacturing the same.

### [Solution to Problem]

As a result of intensive studies to solve the problems described above, the inventors of the present invention found that, by making the end portions of the cross-section of the tape prepreg in the width direction thinner than the central portion and carrying out the molding by placing the thin end portions to overlap each other, it is possible to obtain a fiber-reinforcement composite material having a sufficient appearance and strength, thereby completing the present invention. That is, the gist of the present invention is as follows.
[1] A tape prepreg formed by impregnating, with a resin, a reinforcing fiber bundle in which reinforcing fibers are aligned in one direction, in which a cross-section of the tape prepreg perpendicular to an orientation direction has a portion in which a thickness continuously increases from one end portion and the other end portion in a width direction toward the center in the width direction, and all angles formed by any one boundary line in a thickness direction of the perpendicular cross-section and a boundary line in the width direction are acute angles.
[2] The tape prepreg according to [1], in which at least a part of an upper side and a lower side, which are boundary lines of the perpendicular cross-section in the thickness direction, has linear portions parallel to each other, and the acute angle is 40° to 85°.
[3] The tape prepreg according to [1] or [2], in which the resin has a viscosity of 30,000 Pa·s or more.
[4] The tape prepreg according to [1], in which the perpendicular cross-section has a trapezoidal shape or a dome shape.
[5] The tape prepreg according to [1] or [2], in which the reinforcing fiber bundle is a carbon fiber bundle.
[6] The tape prepreg according to any one of [1] to [3], in which the resin includes an epoxy resin.
[7] A fiber-reinforcement composite material formed by heating and curing the tape prepreg according to any one of [1] to [4].
[8] A fiber-reinforcement composite material manufacturing method including disposing a plurality of the tape prepregs according to any one of [1] to [4] so as to be adjacent to each other by aligning orientation directions of the reinforcing fiber bundles, and heating and pressing the disposed tape prepregs, in which, during the disposition, an end portion of a first tape prepreg in a width direction and an end portion of a second tape prepreg in a width direction are disposed so as to overlap each other when viewed in a thickness direction.
[9] A tape prepreg formed by impregnating, with a resin, a reinforcing fiber bundle in which reinforcing fibers are aligned in one direction, in which a cross-section of the tape prepreg perpendicular to an orientation direction has a portion in which a thickness continuously increases from one end portion and the other end portion in a width direction toward the center in the width direction, and the tape prepreg includes a release sheet.
[10] The tape prepreg according to [9], in which lengths of an upper side and a lower side of the perpendicular cross-section are different, and the release sheet is disposed on a tape prepreg surface on a side of a shorter side.
[11] A method for disposing a tape prepreg formed by impregnating, with a resin, a reinforcing fiber bundle in which reinforcing fibers are aligned in one direction, in which a cross-section of the tape prepreg perpendicular to the orientation direction of the reinforcing fiber bundle has a portion in which a thickness continuously increases from one end portion and the other end portion in a width direction toward the center in the width direction, and the tape prepreg is heated and disposed in a mold.
[12] The tape prepreg disposition method according to [11], in which a plurality of the tape prepregs are disposed so as to be adjacent to each other by aligning an orientation direction of the reinforcing fiber bundles, and, during the disposition, at least a part of the first tape prepreg and at least a part of the second tape prepreg are disposed so as to overlap.
[13] The tape prepreg disposition method according to [12], in which at least a part of a portion in which a thickness of the first tape prepreg continuously increases and at least a part of a portion in which a thickness of the second tape prepreg continuously increases are disposed so as to overlap.
[14] A fiber-reinforcement composite material manufacturing method using a tape prepreg formed by impregnating, with a resin, a reinforcing fiber bundle in which reinforcing fibers are aligned in one direction, in which a cross-section of the tape prepreg perpendicular to the orientation direction of the reinforcing fiber bundle has a portion in which a thickness continuously increases from one end portion and the other end portion in a width direction toward the center in the width direction, and the tape prepreg is heated and disposed in a mold.

### [Advantageous Effects of Invention]

According to the present invention, it is possible to provide a tape prepreg capable of providing a fiber-reinforcement composite material with excellent mechanical properties and excellent dimensional precision for the thickness thereof and in which missing fibers and resin are reduced, a fiber-reinforcement composite material using the tape prepreg, and a method for manufacturing the same.

### [Brief Description of Drawings]

Fig. 1 is a perspective view in which a plurality of tape prepregs 1 are disposed on an upper surface Wa of a flat plate-shaped mold W so as to be adjacent to each other with the longitudinal directions thereof aligned.
Fig. 2 is a cross-sectional view taken along a line II-II of Fig. 1 cut in the thickness direction of the tape prepregs 1.
Fig. 3 is a top surface view of the plurality of the tape prepregs 1 disposed on the upper surface Wa of the mold W of Fig. 1.
Fig. 4 is a perspective view in which a plurality of tape prepregs 2 are disposed on the upper surface Wa of the flat plate-shaped mold W so as to be adjacent to each other with the longitudinal directions thereof aligned.
Fig. 5 is a cross-sectional view taken along a line V-V of Fig. 4 cut in the thickness direction of the tape prepregs 2.
Fig. 6 is a top surface view of a plurality of tape prepregs 2 disposed on the upper surface Wa of the mold W of Fig. 4.
Fig. 7 is a cross-sectional view of a groove roll 5 provided with groove portions 4 having a trapezoidal cross-section.
Fig. 8 is a perpendicular cross-sectional view of a modified example of the tape prepreg 1 of the first embodiment.
Fig. 9 is a perpendicular cross-sectional view of another modified example of the tape prepreg 1 of the first embodiment.
Fig. 10 is a perpendicular cross-sectional view of a modified example of the tape prepreg 2 of the second embodiment.
Fig. 11 is a perpendicular cross-sectional view of another modified example of the tape prepreg 2 of the second embodiment.
Fig. 12 is a schematic view illustrating a method for measuring the size of an angle formed by the upper or lower side and the hypotenuse of the tape prepreg of the present invention.

### [Description of Embodiments]

### [Definition of Terms]

The following term definitions apply throughout the specification and claims.

"Rectangle" means a quadrangle in which all four internal angles are equal right angles.

"Matrix resin" refers to a resin component which is present in the fiber-reinforcement composite material at the periphery of reinforcing fibers and which retains a shape. The above may be thermosetting, thermoplastic, or a mixture thereof.

"Prepreg for a fiber-reinforcement composite material" refers to a material in which a plurality of reinforcing fibers are aligned and impregnated with a matrix resin to form a sheet shape.

"Tape prepreg" refers to a tape-shaped prepreg for a fiber-reinforcement composite material.

"Slit tape prepreg" refers to a material obtained by cutting a prepreg for a fiber-reinforcement composite material along the longitudinal direction of fibers and processing the prepreg to have a narrower width than the original prepreg for a fiber-reinforcement composite material.

"Fiber-reinforcement composite material" refers to a material obtained by heat-curing a sheet formed by disposing a plurality of tape prepregs to be adjacent to each other in the width direction, or a laminated sheet in which a plurality of the sheets are laminated.

### [Tape Prepreg]

The tape prepreg of the present invention is a tape in which a reinforcing fiber bundle in which reinforcing fibers are aligned in one direction is impregnated with a resin. Preferably, the cross-section of the reinforcing fiber bundle perpendicular to the orientation direction has a portion in which the thickness continuously increases from one end portion and the other end portion in the width direction toward the center in the width direction, and all angles formed by any one of the boundary lines in the thickness direction of the perpendicular cross-section and the boundary line in the width direction are acute angles.

In order that, when the tape prepreg is disposed in a mold, a space is not formed between the tape prepreg and the mold and a molded body having a smooth surface is obtained, it is preferable that at least one part of the upper side (side forming one surface of the tape prepreg) and the lower side (side forming the other surface of the tape prepreg), which are the boundary lines in the thickness direction of the perpendicular cross-section, have linear portions parallel to each other.

Preferably, the linear portions include the centers.

In a case where the end portions of the tape prepregs are disposed so as to overlap each other, ridges of the overlapped portions are reduced, thus, angles (the acute angles) formed by any one side of the upper side and the lower side and the hypotenuse which is the boundary line in the width direction are preferably all 40 to 85°, and more preferably all 45 to 80°.

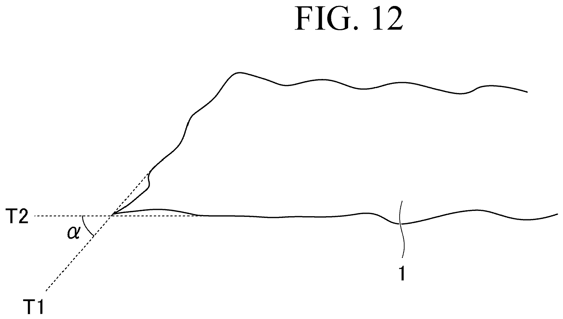

Regarding the angle formed by any one side of the upper side and the lower side and the hypotenuse which is the boundary line, the prepared tape prepreg is unwound, cut to a length of 2 cm, and frozen, the lower surface portion thereof is embedded in clay in a state in which the sliced surface is set as the upper surface, and the end portions thereof are observed at 100x magnification. Using the angle measurement mode of the same device, in a case where there are irregularities on each side of the cross-section, as shown in Fig. 12, measurement is carried out on the angle formed by a straight line connecting each of the endmost portion and the apexes of the convex portions protruding in the direction opposite to the most central part of the prepreg among the irregularities which are present in a range of 1500 µm from the endmost portion in the boundary line in the thickness direction and in the boundary line in the width direction. That is, measurement is carried out on the size of the angle α formed by a straight line T2 connecting the endmost portion and the apex of the convex portion protruding in the direction opposite to the most central part of the prepreg among the irregularities of the boundary line in the prepreg thickness direction, and a straight line T1 connecting the endmost portion and the apex of the convex portion protruding in the direction opposite to the most central part of the prepreg among the irregularities of the boundary line in the prepreg width direction.

In addition, the tape prepreg may include a release sheet. In a case where the lengths of the upper side and the lower side of the cross-section of the reinforcing fiber bundle perpendicular to the orientation direction are different, when the release sheet is disposed on the tape prepreg surface on the shorter side, it is possible to adhere a surface having a large adhesive area to the mold, thus, it is difficult for voids to form in the molded body. On the other hand, when the release sheet is disposed on the surface of the tape prepreg on a side of a longer side, it is possible to expose the tape prepreg side surface portion, thus, it is possible to line up the prepregs without intervals when the prepregs are overlapped and pasted together. Preferably, both a tape prepreg where the release sheet is disposed on the surface of the tape prepreg on the shorter side and a tape prepreg where the release sheet is disposed on the surface of the tape prepreg on the longer side are mounted on the apparatus so as to be placed alternately. Due to this, it is possible to line up adjacent tape prepregs without intervals and to suppress the formation of intervals between adjacent tape prepregs, and even in a case of overlapping, it is possible to suppress the generation of voids and swelling in the height direction. Preferably, the release sheet is disposed on only one surface from the viewpoint of reducing the number of steps when carrying out the disposition.

The tape prepreg is preferably a slit tape prepreg since the shape is easily adjusted.

A description will be given below of embodiments of the tape prepreg of the present invention with reference to the drawings as appropriate.

### <First Embodiment>

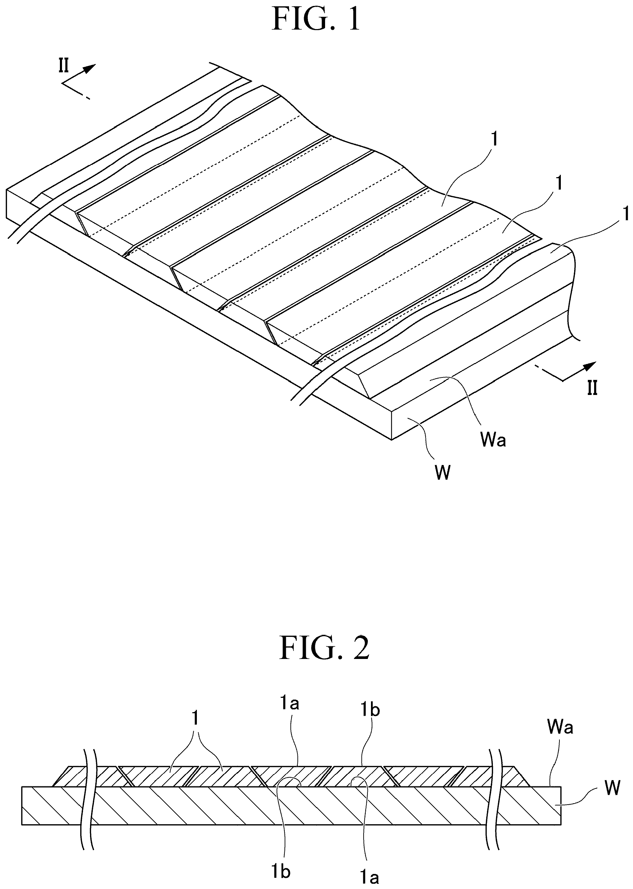

Fig. 1 is a perspective view in which a plurality of tape prepregs 1 are disposed on the upper surface Wa of the flat plate-shaped mold W so as to be adjacent to each other with the longitudinal directions aligned.

Fig. 2 is a cross-sectional view taken along the line II-II of Fig. 1 cut in the thickness direction of the tape prepregs 1.

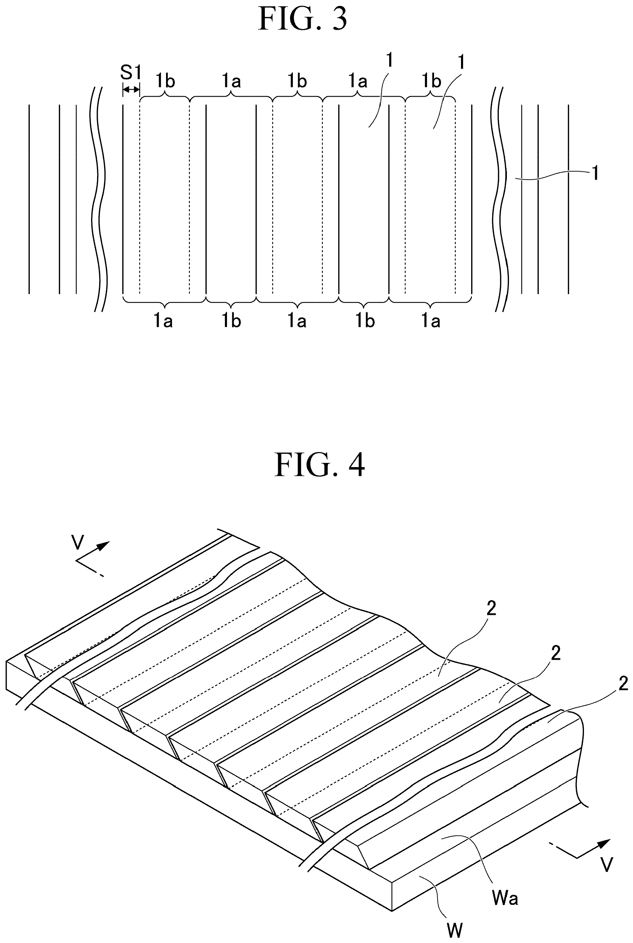

Fig. 3 is a top surface view of a plurality of the tape prepregs 1 disposed on the upper surface Wa of the mold W of Fig. 1.

As shown in Fig. 1, the orientation directions of the reinforcing fibers forming the reinforcing fiber bundle of the tape prepregs 1 are aligned in one direction along the longitudinal direction of the tape prepreg 1.

As shown in Fig. 2, the shape of the perpendicular cross-section of the tape prepregs 1 orthogonal to this orientation direction is trapezoidal. Here, for convenience of explanation, in a case where the boundary line in the thickness direction of the perpendicular cross-section is the base of the trapezoid, the longest base of the trapezoid is referred to as a lower side 1a (lower bottom) and the base of the trapezoid opposed to the lower side 1a is referred to as an upper side 1b (upper bottom). The lower side 1a and the upper side 1b have linear portions which are parallel to each other. The two hypotenuses (trapezoidal legs), which are boundary lines in the width direction connecting the lower side 1a and the upper side 1b, are inclined with respect to the upper surface Wa of the mold W.

When viewed in the width direction of the tape prepreg 1 in Fig. 2, the midpoint from one end portion to the other end portion of the lower side 1a is the center in the width direction. There is an intersection between a perpendicular line from the midpoint of the lower side 1a to the upper side 1b and the upper side 1b. That is, the upper side 1b and the lower side 1a have linear portions parallel to each other, and among the linear portions, the linear portion of the lower side 1a has the center, and the linear portion of the upper side 1b has a linear portion which intersects a perpendicular line drawn out from the center.

In Fig. 2, the lower side 1a of the trapezoid represented by the perpendicular cross-section of the first tape prepreg 1 is positioned on the opposite side to the upper surface Wa of the mold W and is exposed upward. On the other hand, the lower side 1a of the trapezoid represented by the perpendicular cross-section of the second tape prepreg 1 adjacent thereto is in contact with the upper surface Wa of the mold W. In this manner, the front side (the surface on the lower side 1a side) and the back side (the surface on the upper side 1b side) of each tape prepreg 1 are alternately adjacent to each other, such that the end portion of the lower side 1a of the first tape prepreg 1 overlaps the end portion of the lower side 1a of the second tape prepreg 1 when viewed in the thickness direction.

That is, as shown in Fig. 3, when made transparent and seen from above, the end portions of the lower sides 1a of the trapezoids represented by the perpendicular cross-sections of each tape prepreg 1 overlap the end portions of the lower sides 1a of the trapezoids represented by the perpendicular cross-sections of the tape prepregs 1 adjacent thereto. When there is such an overlapping disposition, even if the width of each tape prepreg 1 changes slightly along the longitudinal direction, if the change is in the overlapping range with the adjacent tape prepreg 1, when viewed from above, a portion where the tape prepreg 1 is not present (a gap between adjacent tape prepregs 1) is unlikely to be generated.

As shown in Fig. 3, when viewed from above, a width S1 of the overlap between the adjacent tape prepregs 1 is preferably 0.01 to 2 mm, more preferably 0.05 to 1.5 mm, and even more preferably 0.1 to 1 mm.

When the width S1 is within this range, the end portions of the adjacent tape prepregs 1 are combined and appropriately overlap each other and it is easy to dispose each of the tape prepregs 1 so as to be adjacent to each other without intervals.

In a case where the shape of the perpendicular cross-section of the tape prepreg 1 is trapezoidal, a length ratio R represented by (the length of the lower side 1a of the trapezoid/the length of the upper side 1b of the trapezoid) is preferably 1.003 to 2.67, more preferably 1.02 to 1.88, and even more preferably 1.03 to 1.45.

When the length ratio R is within this range, the end portions of adjacent tape prepregs 1 are combined and appropriately overlap each other and it is easy to dispose each of the tape prepregs 1 so as to be adjacent to each other without intervals.

In a case where the shape of the perpendicular cross-section of the tape prepreg 1 is trapezoidal, the length of the lower side 1a of the trapezoid is preferably 1 to 26 mm, more preferably 3 to 20 mm, and even more preferably 6 to 13 mm.

In addition, the length of the upper side 1b of the trapezoid is preferably 2 to 12.98 mm, more preferably 3 to 12.9 mm, and even more preferably 4 to 12.8 mm.

In addition, the thickness of the trapezoid (distance between the lower side 1a and the upper side 1b) is preferably 10 to 1000 µm, more preferably 100 to 750 µm, and even more preferably 200 to 500 µm.

When the length of the lower side 1a of the trapezoid, the length of the upper side 1b of the trapezoid, and the thickness of the trapezoid are all within this range, the end portions of the adjacent tape prepregs 1 are combined and appropriately overlap each other and it is easy to dispose each of the tape prepregs 1 to be adjacent to each other without intervals.

In a case where the shape of the perpendicular cross-section of the tape prepreg 1 is trapezoidal, the midpoint of the lower side 1a and the midpoint of the upper side 1b of the trapezoid preferably overlap when viewed in the thickness direction. In addition, when folded back at a line connecting the midpoint of the lower side 1a and the midpoint of the upper side 1b of the trapezoid, the trapezoid preferably has a line-symmetrical cross-sectional shape in which the left and right sides of the trapezoid overlap.

In addition, the shapes of the perpendicular cross-sections of each of the tape prepregs 1 disposed on the upper surface Wa of the mold W are preferably substantially the same as each other.

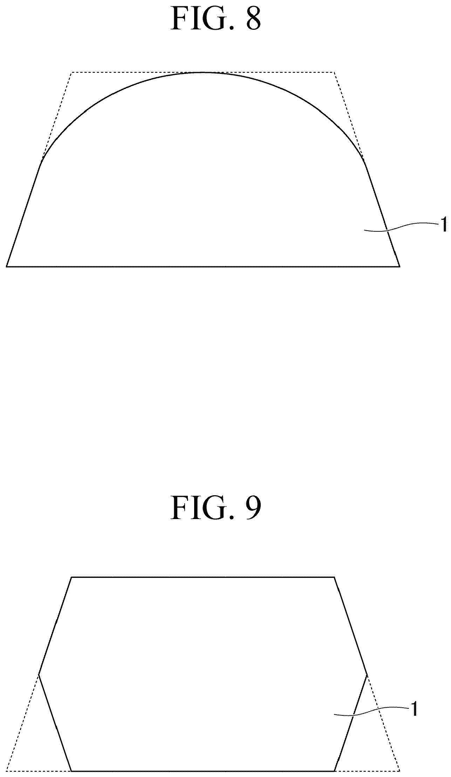

The shape of the perpendicular cross-section of the tape prepreg 1 of the first embodiment described above is an isosceles trapezoid, but may be a modified form based on this trapezoid. For example, the perpendicular cross-section of the tape prepreg 1 may have a dome shape with a rounded apex with obtuse angles formed by the upper side (upper bottom) of the trapezoid and the legs as shown in Fig. 8, or may have a hexagonal shape in which acute-angled apex portions formed by the lower side (lower bottom) of the trapezoid and the legs are cut off as shown in Fig. 9. In any of the modified forms, the perpendicular cross-section of the tape prepreg 1 has a portion in which the thickness continuously increases from one end portion and the other end portion in the width direction toward the center in the width direction and has linear portions in which at least a part of the upper side and the lower side of the perpendicular cross-section are parallel to each other.

### <Second Embodiment>

Fig. 4 is a perspective view in which a plurality of tape prepregs 2 are disposed on the upper surface Wa of the flat plate-shaped mold W so as to be adjacent to each other with the longitudinal directions aligned.

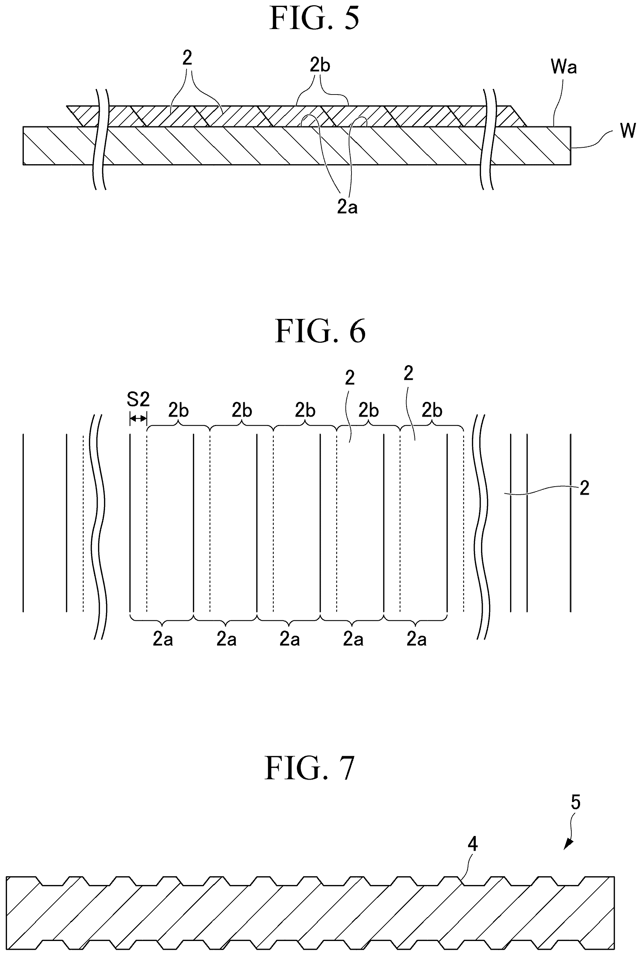

Fig. 5 is a cross-sectional view taken along the line V-V of Fig. 4 cut in the thickness direction of the tape prepregs 2.

Fig. 6 is a top surface view of a plurality of the tape prepregs 2 disposed on the upper surface Wa of the mold W of Fig. 4.

The orientation directions of the reinforcing fibers forming the reinforcing fiber bundle of the tape prepreg 2 are aligned in one direction along the longitudinal direction of the tape prepreg 2. As shown in Fig. 4, the shapes of the perpendicular cross-sections of the tape prepregs 2 orthogonal to this orientation direction are parallelograms. A parallelogram is a shape in which the diagonal lengths are equal, the diagonal size is equal, and the diagonal lines pass through the midpoints of the other diagonal lines. In the present invention, rectangles and squares having diagonals of 90 degrees are not included as parallelograms.

Below, for convenience of explanation, the longest base of the parallelogram is referred to as a lower side 2a and the side opposed to the lower side 2a is referred to as an upper side 2b. The lower side 2a and the upper side 2b have linear portions parallel to each other. The two hypotenuses connecting the lower side 2a and the upper side 2b are inclined with respect to the upper surface Wa of the mold W.

When viewed in the width direction of the tape prepreg 2 in Fig. 4, the midpoint from one end portion to the other end portion of the lower side 2a is the center in the width direction. There is an intersection between the perpendicular line from the midpoint of the lower side 2a to the upper side 2b and the upper side 2b. That is, the upper side 2b and the lower side 2a have linear portions parallel to each other and, in the linear portions, the linear portion of the lower side 2a has the center, and the linear portion of the upper side 2b has a linear portion which intersects a perpendicular line drawn from the center.

In the cross-sectional view of Fig. 5, the lower side 2a of the first tape prepreg 2 is in contact with the upper surface Wa of the mold W, while the upper side 2b is positioned on the opposite side of the upper surface Wa of the mold W and is exposed upward. The lower side 2a and the upper side 2b of the second tape prepreg 2 adjacent thereto are also the same, as in the first tape prepreg 1. The end portion of the lower side 2a of the first tape prepreg 2 overlaps the end portion of the upper side 2b of the second tape prepreg 2 when viewed in the thickness direction.

That is, as shown in Fig. 6, when made transparent and seen from above, the end portion of the lower side 2a of each tape prepreg 2 overlaps the end portion of the upper side 2b of the tape prepreg 2 adjacent thereto. With such an overlapping disposition, even if the width of each tape prepreg 2 changes slightly along the longitudinal direction, when in an overlapping range with the tape prepreg 2 adjacent thereto, viewed from above, a portion where the tape prepreg 2 is not present (a gap between adjacent tape prepregs 2) is unlikely to be generated.

As shown in Fig. 6, when viewed from above, the width S2 of the overlap between the adjacent tape prepregs 2 is preferably 0.01 to 2 mm, more preferably 0.05 to 1.5 mm, and even more preferably 0.1 to 1 mm.

When the width S2 is within this range, the end portions of the adjacent tape prepregs 2 are combined and appropriately overlap each other and it is easy to dispose each of the tape prepregs 2 so as to be adjacent to each other without intervals.

In a case where the shape of the perpendicular cross-section of the tape prepreg 2 is a parallelogram, the size of the acute angle of the internal angles is preferably 40° to 85°, more preferably 50° to 80°, and even more preferably 60° to 75°.

When the size of the acute angle is within this range, the end portions of adjacent tape prepregs 2 are combined and appropriately overlap each other and it is easy to dispose each of the tape prepregs 2 so as to be adjacent to each other without intervals.

In a case where the shape of the perpendicular cross-section of the tape prepreg 2 is a parallelogram, the lengths of the lower side 2a and the upper side 2b of the parallelogram are preferably 1 to 26 mm, more preferably 3 to 20 mm, and even more preferably 6 to 13 mm.

In addition, the thickness of the parallelogram (distance between the lower side 1a and the upper side 1b) is preferably 10 to 1000 µm, more preferably 100 to 750 µm, and even more preferably 200 to 500 µm.

When the lengths of the lower side 2a and the upper side 2b of the parallelogram and the thickness of the parallelogram are all within these ranges, the end portions of adjacent tape prepregs 2 are combined and appropriately overlap each other and it is easy to dispose each of the tape prepregs 2 so as to be adjacent to each other without intervals.

In addition, the shapes of the perpendicular cross-sections of each of the tape prepregs 2 disposed on the upper surface Wa of the mold W are preferably substantially the same as each other.

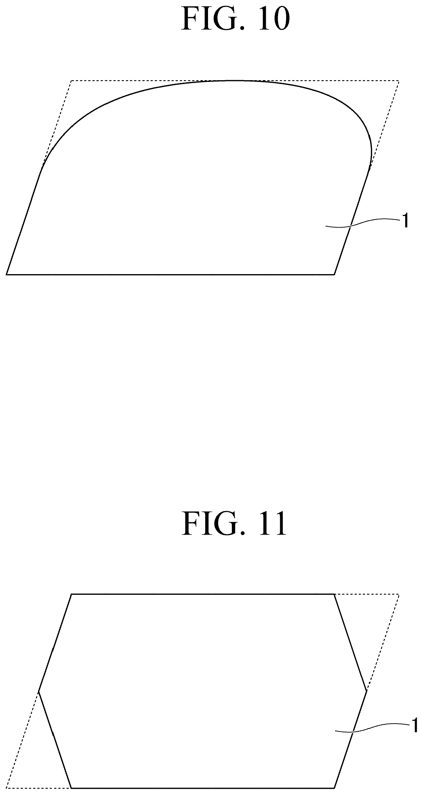

The shape of the perpendicular cross-section of the tape prepreg 2 of the second embodiment described above is a parallelogram, but may be a modified form based on this parallelogram. For example, the perpendicular cross-section of the tape prepreg 2 may have a dome shape with rounded corners at both ends of the upper side of the parallelogram as shown in Fig. 10, or may have a hexagonal shape in which acute-angled apex portions of the parallelogram are cut off as shown in Fig. 11. In any of the modified forms, the perpendicular cross-section has a portion in which the thickness continuously increases from one end portion and the other end portion in the width direction toward the center in the width direction and has linear portions in which at least a part of the upper side and the lower side of the perpendicular cross-section are parallel to each other.

In the tape prepreg described above, a reinforcing fiber bundle in which reinforcing fibers are aligned in one direction is impregnated with a resin (matrix resin).

Next, a description will be given of an example of the material of the tape prepreg of the present invention.

### (Reinforcing fiber)

Examples of reinforcing fibers include carbon fiber, aramid fiber, nylon fiber, high-strength polyester fiber, glass fiber, boron fiber, alumina fiber, silicon nitride fiber, and the like. Among these, from the viewpoint of excellent flame retardancy, carbon fiber, aramid fiber, glass fiber, boron fiber, alumina fiber, and silicon nitride fiber are preferable and, from the viewpoint of excellent specific strength and specific elasticity, carbon fiber is particularly preferable. The diameters and lengths of the fibers may be the same as in the related art.

### (Matrix Resin)

As the matrix resin, a thermoplastic resin or a thermosetting resin is preferable. Examples of the thermosetting resin include epoxy resin, vinyl ester resin, unsaturated polyester resin, polyimide, and the like. Epoxy resins having excellent material price, ease of viscosity adjustment, balance of the mechanical properties of the cured product, and the like are preferable. The type of resin contained in the matrix resin may be one type alone or two or more types. From the viewpoint of retaining a shape in which there is a portion in which the thickness continuously increases toward the center in the width direction of the tape, the viscosity of the resin is preferably 20000 Pa·s or more, and more preferably 30,000 Pa·s or more. From the viewpoint of handleability, 100,000 Pa·s or less is preferable, and 50,000 Pa·s or less is more preferable.

### (Epoxy Resin)

As the epoxy resin, an epoxy resin having amines, phenols, or a compound having a carbon-carbon double bond as a precursor is particularly preferable. Specific examples of the epoxy resin having amines as a precursor include various isomers of tetraglycidyl diaminodiphenylmethane, triglycidyl-p-aminophenol, triglycidyl-m-aminophenol, and triglycidyl aminocresol. Tetraglycidyl diaminodiphenylmethane has excellent heat resistance and is thus preferable as a resin for fiber-reinforcement composite materials for aircraft structural materials.

Examples of epoxy resins having phenols as precursors include bisphenol A type epoxy resin, bisphenol F type epoxy resin, bisphenol S type epoxy resin, phenol novolak type epoxy resin, cresol novolak type epoxy resin, and resorcinol type epoxy resin. Since the liquid bisphenol A type epoxy resin and the bisphenol F type epoxy resin have a low viscosity, generally, the viscosity is adjusted by combination with a high viscosity, solid epoxy resin or an additive. When the viscosity is excessively low, the tack of the prepreg becomes excessive, the bobbin releasability of the slit prepreg deteriorates and the tapes tend to adhere to each other during laminating or the like. In contrast, when a solid epoxy resin is used, it is possible to lower the tack of the prepreg, which has the effect of preventing adhesiveness between the prepregs; however, when the viscosity is excessively high, the tack and drape property are impaired and the adhesiveness to the backing film tends to deteriorate.

Examples of the epoxy resin having a compound having a carbon-carbon double bond as a precursor include an alicyclic epoxy resin and the like.

One type of these epoxy resins may be used alone, or two or more types thereof may be appropriately mixed and used. A combination of a glycidylamine-type epoxy resin and a glycidyl ether-type epoxy resin has both heat resistance and toughness and is thus particularly preferable.

Commercially available products of epoxy resins include jER (registered trademark) 828, 827, 807, 604, 630, 1001, 1002, 1004, 4004, 4007, and 1032H60 manufactured by Mitsubishi Chemical Corporation, EPICLON (registered trademark) 830, 850, N673, N675, N770, N775, HP4032, HP4700, HP4770, and EXA-1514 manufactured by DIC Corporation, TACTIX (registered trademark) 742 and 556 manufactured by Huntsman Advanced Materials, and the like, without being limited thereto.

### (Thermoplastic Resin)

The matrix resin may be blended with a thermoplastic resin, as necessary. In a case where an epoxy resin is used as the main component of the matrix resin, when mixed with a thermoplastic resin, high toughness is imparted to the cured product of the epoxy resin composition and stickiness of the epoxy resin composition is suppressed such that there is an effect of adjusting the prepreg tack to an appropriate level and suppressing the resin flow immediately before curing at high temperatures.

Examples of the thermoplastic resin include polyether sulfone, polyvinyl formal, phenoxy resin, polyamide, acrylic block copolymer, and the like.

One type of these thermoplastic resins may be used alone, or two or more types may be used in combination.

In a case where the thermoplastic resin is used as interlayer-reinforcing particles, it is preferable to provide the thermoplastic resin particle layer on the surface of the tape prepreg. In a case of an embodiment having a release sheet, from the viewpoint of the adhesiveness between the release sheet and the prepreg, it is preferable to provide the thermoplastic resin particle layer on a surface of the prepreg having no release sheet. In the case of a form of a slit tape prepreg, slitting may be carried out after providing the thermoplastic resin particle layer, or laminating may be carried out after slitting the thermoplastic resin particle layer. Using a method such as laminating the thermoplastic resin particle layer after being slit or slitting so that the thermoplastic resin particle layer is exposed, it is possible to improve the adhesiveness between tapes by allowing the thermoplastic resin particles to also be present on the slit cross-section (side surface). As the thermoplastic resin particles, it is possible to use thermoplastic resin particles which are soluble or insoluble in the matrix resin of the prepreg. In addition, a resin layer for suppressing wrinkles may be provided between the thermoplastic resin particle layer and the fiber layer. The resin of the resin layer is preferably a resin having high compatibility with the matrix resin of the prepreg and the resin of the resin layer and the matrix resin are preferably both epoxy resins. In addition, the thermoplastic resin particles are preferably polyamide particles.

### (Other Additives)

It is possible to add known additives (solid rubber, filler, diluent, solvent, pigment, plasticizer, antioxidant, stabilizer, and the like) and the like to the matrix resin as necessary. Examples of the pigment include carbon black, graphene, and the like. Carbon black and graphene color the epoxy resin black, hide the color of the resin when molding the fiber-reinforcement composite material described below, and have the effect of imparting a high-quality appearance especially when applied to sports products while also having an ultraviolet absorption capacity and a heat dissipation function.

### (Matrix Resin Content)

The content of the matrix resin with respect to the total mass of the tape prepreg of the present invention is preferably 15 to 50% by mass, and more preferably 20 to 45% by mass.

When at the lower limit value or more in the above range, it is possible for the reinforcing fibers to be sufficiently bonded to each other and to sufficiently suppress missing reinforcing fibers.

When at the upper limit value or less in the above range, it is possible to sufficiently exhibit the mechanical properties of the reinforcing fibers.

### <Release Sheet (Backing Film)>

It is preferable to attach a backing film (cover film) to the tape prepregs in order to prevent the tape prepregs from adhering to each other and to improve the releasability from the bobbin. The backing film may be attached before slitting, or may be attached after slitting.

Examples of the material of the backing film include polyethylene, polypropylene, polyester, and the like.

The thickness of the backing film is preferably 10 to 80 µm. When the width of the backing film is the same as or wider than the width of the tape prepreg, the tape prepregs are reliably prevented from adhering to each other and the releasability from the bobbin is improved.

### <Tape Prepreg Manufacturing Method>

It is possible to partially apply a known manufacturing method to the tape prepreg of the present invention. That is, for example, as described in Patent Literature 1 and 2, a prepreg including a reinforcing fiber bundle in which reinforcing fibers are aligned in one direction is prepared by a known method and then the prepreg is passed through a slitter for cutting to obtain a tape prepreg with a desired width.

When cutting the prepreg, by applying the blade diagonally with respect to the surface of the prepreg in the slitter so as to form the shape of the perpendicular cross-section described above, it is possible to obtain a result in which the perpendicular cross-section is a parallelogram or trapezoid as in the second embodiment. In addition, as shown in Fig. 7, while pressing the groove roll 5 having the groove portions 4 having a trapezoidal cross-section against the prepreg, the groove roll 5 is rolled along the fiber direction of the reinforcing fibers, such that it is possible to obtain a result in which the perpendicular cross-section is a trapezoid as in the first embodiment. Alternatively, it is also possible to obtain a tape prepreg having a perpendicular cross-section with a desired shape by further passing a tape prepreg obtained by slitting using a slitter through a die having a desired shape and scraping off unnecessary portions.

### <Tape Prepreg Disposition Method>

In the tape prepreg of the present invention in which a reinforcing fiber bundle in which reinforcing fibers are aligned in one direction is impregnated with a resin, the perpendicular cross-section of the tape prepreg in the orientation direction of the reinforcing fiber bundle has a portion in which the thickness continuously increases from one end portion and the other end portion in the width direction toward the center in the width direction.

In the tape prepreg disposition method of the present invention, it is preferable to heat the tape prepreg of the present invention and dispose the tape prepreg in a mold.

In addition, in the tape prepreg disposition method of the present invention, it is more preferable that a plurality of the tape prepregs of the present invention be disposed so as to be adjacent to each other by aligning the orientation directions of the reinforcing fiber bundles, and, during the disposition, at least a part of the first tape prepregs and at least a part of the second tape prepreg be disposed so as to overlap each other.

In such a case, at least a part of the portion in which the thickness of the first tape prepreg continuously increases and at least a part of the portion in which the thickness of the second tape prepreg continuously increases are preferably disposed so as to overlap.

### <Automatic Laminating Apparatus>

It is possible to use a known apparatus as the apparatus for automatic laminating (auto tape placement apparatus). As an automatic laminating apparatus, for example, as shown in Japanese Unexamined Patent Application, First Publication No. H4-62142 and Japanese Unexamined Patent Application, First Publication No. H5-200898, it is possible to carry out lamination by winding a tape prepreg drawn from a supply apparatus around a laminating roll and rolling the laminating roll along a mold while pressing into the mold. In addition, by having a heating portion capable of heating the laminated portion, it is possible to heat the tape prepreg to impart adhesiveness to carry out the lamination. In a case of using a release sheet, application is possible to an embodiment having a release sheet by using a laminating apparatus provided with an unwinding portion which feeds out the tape prepreg on which the release sheet is disposed, a take-up portion which peels off and takes up the release sheet from the prepreg tape, and a laminating head which presses rolls provided thereon while relatively moving with respect to a mold.

### [Fiber-Reinforcement Composite Material]

The fiber-reinforcement composite material of the present invention is obtained by heating and curing the tape prepreg of the present invention. A plurality of tape prepregs may be combined and cured, or a single tape prepreg may be cured.

The plurality of tape prepregs forming the fiber-reinforcement composite material are preferably disposed so as to be adjacent to each other in the width direction. The number of tape prepregs disposed in the width direction is appropriately determined according to the shape of the fiber-reinforcement composite material and examples thereof include approximately 10 to 100 tape prepregs. By using a plurality of the tape prepregs of the present invention, it is possible to spread the tape prepregs without creating intervals between the tape prepregs.

The plurality of tape prepregs forming the fiber-reinforcement composite material may not only be disposed so as to be adjacent to each other in the width direction, but may be further laminated in the thickness direction. The number of layers is, for example, approximately 2 to 20 layers.

### [Fiber-Reinforcement Composite Material Manufacturing Method]

The fiber-reinforcement composite material manufacturing method of the present invention includes disposing a plurality of the tape prepregs of the present invention so as to be adjacent to each other by aligning orientation directions of the reinforcing fiber bundles, and carrying out heating and pressing thereon. During the disposition, the end portion of the first tape prepreg in the width direction and the end portion of the second tape prepreg in the width direction are disposed so as to overlap each other when viewed in the thickness direction.

In a case where the tape prepreg 1 of the first embodiment described above is used, the disposition is preferably carried out as illustrated in Figs. 1 to 3. The width (S1 in Fig. 3) of the overlapping end portions of the adjacent tape prepregs 1 in the width direction is preferably 0.01 to 2 mm, more preferably 0.05 to 1.5 mm, and even more preferably 0.1 to 1 mm.

When the width is 0.01 mm or more, even if the dimensional precision of the tape prepreg 1 in the width direction is a little low, it is easier to keep within the range of the overlapping width. In addition, when the width is 2 mm or less, it is easier to dispose the end portions of the first tape prepreg 1 and the second tape prepreg 1 so as to overlap each other in the width direction.

In a case where the tape prepreg 2 of the second embodiment described above is used, the disposition is preferably carried out as illustrated in Figs. 4 to 6. The width (S2 in Fig. 6) of the overlapping end portions of the adjacent tape prepregs 2 in the width direction is preferably 0.01 to 2 mm, more preferably 0.05 to 1.5 mm, and even more preferably 0.1 to 1 mm.

When the width is 0.01 mm or more, even if the dimensional precision of the tape prepreg 2 in the width direction is a little low, it is easier to keep within the range of the overlapping width. In addition, when the width is 2 mm or less, it is easier to dispose the end portions of the first tape prepreg 2 and the second tape prepreg 2 so as to overlap each other in the width direction.

As described above, the end portions of the first tape prepreg and the second tape prepreg are disposed to overlap in the width direction and the lower surface of each tape prepreg is disposed so as not to ride on the slope of the end portion of the adjacent tape prepreg, thus making it possible to make the thickness of the formed fiber-reinforcement composite material uniform.

The number of tape prepregs disposed in the width direction of the tape prepregs to form the fiber-reinforcement composite material is appropriately determined according to the shape of the fiber-reinforcement composite material and examples thereof include approximately 10 to 100 tape prepregs.

In order to form the fiber-reinforcement composite material, the tape prepreg may be disposed not only in the width direction of the tape prepreg but may also be laminated in the thickness direction of the tape prepreg. The number of layers is, for example, approximately 2 to 20 layers.

For the fiber-reinforcement composite material manufacturing method of the present invention, it is possible to carry out the manufacturing by a known method as long as the tape prepreg of the present invention is used and disposed by a predetermined method. Examples thereof include a method for obtaining a fiber-reinforcement composite material in which tape prepregs are spread on a molding die having a desired surface shape such as a flat surface or a curved surface using an automatic laminating apparatus (auto layup apparatus), vacuum packed, and then heated so as to be cured in the desired shape.

The temperature and time for heating the tape prepreg are not particularly limited as long as the impregnated matrix resin undergoes a curing reaction at the temperature and in the time, and examples thereof include heating conditions of approximately 1 to 3 hours at 100 to 200°C.

When heating the tape prepreg, it is preferable to carry out pressing at the same time. The pressure to be applied may be any pressure at which the tape prepregs are sufficiently adhered to each other in a desired form, and heating is preferably carried out while keeping the pressure at 100 kPa or less. Examples of the pressing method include a method in which a plurality of tape prepregs are sealed in a resin sheet or a resin bag in a spread state and the internal space is subjected to vacuum suction.

### (Action and Effects)

The tape prepreg of the present invention has a portion in which the cross-section of the reinforcing fiber bundle perpendicular to the orientation direction continuously increases in thickness from the end portions in the width direction toward the center direction in the width direction, and has linear portions where the upper side and lower side of the perpendicular cross-section are parallel, thus, the overlapping portions do not become thick when the end portions are overlapped and laminated using an automatic laminating apparatus and it is possible to obtain a finish with a uniform thickness. In addition, the fiber-reinforcement composite material obtained from the tape prepreg of the present invention has excellent mechanical properties and dimensional precision as there are no missing fibers.

### [Examples]

A detailed description will be given of the present invention using Examples, but the present invention is not limited thereto.

### <Example 1>

### (Preparation of Matrix Resin)

15 parts of tetraglycidyl diaminodiphenylmethane (jER 604 manufactured by Mitsubishi Chemical Corporation), 50 parts of liquid bisphenol A type epoxy resin (jER 828 manufactured by Mitsubishi Chemical Corporation), 35 parts of oxazoridone ring-modified epoxy resin (TSR-400 manufactured by DIC Corporation), 2 parts of polyether sulfone (Sumika Excel 5003MP manufactured by Sumitomo Chemical Co., Ltd.) were mixed in a resin preparation pot, stirred at 150°C for 2 hours, and dissolved and mixed. After cooling this resin mixture to 60°C, 40 parts of 4,4'-diaminodiphenyl sulfone (Seikacure S manufactured by Wakayama Seika Kogyo Co., Ltd.) were added thereto and further kneaded to obtain an epoxy resin composition. This was uniformly coated on a release paper coated with a silicone-based release agent to prepare a 72 g/m² resin film.

### (Preparation of Prepreg for Fiber-Reinforcement Composite Material)

The prepared 72 g/m² resin film was pasted from above and below onto high-strength carbon fibers (TR50S-15K manufactured by Mitsubishi Chemical Corporation) aligned in one direction, the resin was impregnated into the fibers by heat and pressure, and a roll of prepreg for a fiber-reinforcement composite material was obtained with a fiber base weight of 268 g/m², a resin content of 35 wt%, and a width of 1000 mm.

### (Preparation of Tape Prepreg for Fiber-Reinforcement Composite Material)

The obtained prepreg for a fiber-reinforcement composite material was set in a dedicated slit machine and, while being unwound under a constant tension, inserted into a score cutter set with a width of 6.4 mm and slit in the longitudinal direction of carbon fibers. After that, the release paper was peeled off and the tape prepreg was continuously pressed against a groove roll (refer to Fig. 7) in which groove portions having a trapezoidal cross-section were engraved, which was installed in a subsequent step, and molded such that the cross-section thereof became a trapezoid. After that, a polyethylene film with a thickness of 25 µm was pasted on the lower surface (long side) of the tape prepreg with a trapezoidal cross-section and a total length of 100 m was wound up spirally on a paper tube with a diameter of 3 inches such that the polyethylene film became the lower surface when winding. Twenty tape prepregs were prepared.

### <Measurement/Evaluation>

### (Measurement of Width)

The prepared tape prepregs were unwound, passed through an infrared width-measuring apparatus provided with a light-emitting portion and a light-receiving portion, and the width at a total of 100 points was measured every 20 cm in the longitudinal direction to obtain the maximum width, the minimum width, and the average width. The measurement results are shown in Table 1. It was confirmed that there was no practical problem in any of the tape prepregs as the differences between the maximum width and the average width and the differences between the minimum width and the average width were within 0.2 mm.

### (Measurement of Thickness)

The prepared tape prepregs were unwound, the thickness of the central portion in the width direction was measured at 10 points using a caliper, and the average thereof was taken as the thickness of the central portion.

In addition, the thickness at a position 0.1 mm from the end portions of the tape prepreg was measured at 10 points using a caliper and the average thereof was taken as the thickness of the end portions.

### (Measurement of Angle Formed by Boundary Lines)

The prepared tape prepregs were unwound, cut to a length of 2 cm, and frozen in a freezer for 1 hour. The results were slowly sliced into 1 cm portions in the freezer using a feather razor while being careful not to lose the cross-sectional shape. The lower surface portion was embedded in clay in a state where the sliced surface faced up, and the end portions were observed at a magnification of 100 times using a VHX-5000 and a ZS20 lens manufactured by KEYENCE Corporation. With the obtained images, measurement was carried out on the angles formed by straight lines connecting each of the endmost portions of the prepreg and the apexes of the convex portions protruding in the direction opposite to the most central part of the prepreg among the irregularities which were present in a range of 1500 µm from the endmost portion in the boundary line in the thickness direction and in the boundary line in the width direction.

### (Preparation of Fiber-Reinforcement Composite Material)

16 prepared tape prepregs were set in a tape placement apparatus (STAXX Compact 1700 manufactured by Broetje-Automation GmbH), and the placement was carried out with a width of 6.2 mm x 16 tape prepregs in a stainless-steel flat mold. This placement was carried out 3 times in the width direction and repeated for 8 layers in the thickness direction to obtain a prepreg stack having a width of 300 mm and a thickness of 2 mm. Since the width of the placement was set to 6.2 mm, in the Examples, it was possible to perform the placement without intervals in a state where the end portions of the tape prepregs overlapped each other.

This prepreg stack was transferred to an aluminum plate with a thickness of 20 mm, a stainless-steel plate with a thickness of 1 mm was placed on the upper surface, sealed and covered with a nylon film and sealant, and then degassed to 5 kPa or less. The result was transferred to an autoclave and heat-cured under a pressure environment of 600 kPa under temperature conditions of 180°C for 2 hours (heating rate 2°C/min).

### (Evaluation of Fiber-Reinforcement Composite Material)

The thickness of the obtained flat plate formed of the fiber-reinforcement composite material was measured at 5 points with a micrometer and the average thereof and the difference between the maximum and minimum thickness were calculated. Next, the surface condition of the flat plate was visually observed and the presence or absence of missing reinforcing fibers or resin was determined. Furthermore, 6 test pieces were cut out from the flat plate with a size of 127 mm × 12.7 mm width such that the fiber direction was the longitudinal direction and a three-point bending test was carried out according to ASTM D790 using a universal testing machine provided with a 5 kN load cell. The results of these measurements are shown in Table 1.

### <Example 2>

A trapezoidal tape prepreg having a cross-section close to a parallelogram was prepared by the same procedure as in Example 1 except that, after setting the position of the score cutter at an angle of 60° with respect to the base (bottom surface) of the cross-section of the prepreg for a fiber-reinforcement composite material and carrying out slitting, a groove roll was not used. After measuring the width and thickness, the evaluation of the fiber-reinforcement composite material was performed in the same manner as in Example 1 after tape placement and autoclave molding. The measurement results are shown in Table 1.

### <Comparative Example 1>

A shear cutter type slit machine was used instead of the score cutter and the spacing was adjusted to 6.4 mm to prepare a tape prepreg with a substantially rectangular cross-sectional shape. As a result of measuring the width and thickness of the tape prepreg, it was confirmed that there was no practical problem as the differences between the maximum width and the average width and the differences between the minimum width and the average width were within 0.2 mm. The measurement results are shown in Table 1. Next, a fiber-reinforcement composite material was prepared by the following method.

### (Preparation of Fiber-Reinforcement Composite Material)

In the same manner as the Examples, 16 prepared tape prepregs were set in a tape placement apparatus (STAXX Compact 1700 manufactured by Broetje-Automation GmbH), and the placement was carried out with a width of 6.2 mm x 16 tape prepregs in a stainless-steel flat mold. This placement was repeated 3 times in the width direction and for 8 layers in the thickness direction to obtain a prepreg stack having a width of 300 mm and a thickness of 2 mm. Since the width of the placement was set to 6.2 mm, in the Comparative Example, it was possible to perform the placement without intervals in a state where the end portions of the tape prepregs overlapped each other. However, the thickness of the end portions became extremely thick, the surfaces were irregular, and it was not possible to ensure smoothness, thus, this prepreg stack was discarded.

Once more, the width of the placement was set to 6.4 mm and the placement was carried out again to obtain a prepreg stack. Since there was no overlap between adjacent tape prepregs, the surface of the prepreg stack was not irregular. However, since the shapes of the adjacent tape prepregs were not exactly the same shape, there were portions where the shapes did not adhere to each other when viewed in the longitudinal direction and intervals were generated in these portions. Therefore, when the surface of the prepreg stack was viewed from above, it was visually confirmed that there were intervals present at a plurality of locations.

This prepreg stack was transferred to an aluminum plate with a thickness of 20 mm, a stainless-steel plate with a thickness of 1 mm was placed on the upper surface, sealed and covered with a nylon film and sealant, and then degassed to 5 kPa or less. The result was transferred to an autoclave and heat-cured under a pressure environment of 600 kPa under temperature conditions of 180°C for 2 hours (heating rate 2°C/min). After that, the fiber-reinforcement composite material was evaluated in the same manner as in Example 1. The measurement results are shown in Table 1.

**[Table 1]**

| | | Example 1 | Example 2 | Comparative Example 1 |
|---|---|---|---|---|
| Tape prepreg | Cross-section shape | Trapezoid | Trapezoid | Rectangle |
| | Maximum width [mm] | 6.56 | 6.52 | 6.45 |
| | Minimum width [mm] | 6.39 | 6.33 | 6.38 |
| | Average width [mm] | 6.44 | 6.45 | 6.41 |
| | Central portion thickness [mm] | 0.24 | 0.26 | 0.26 |
| | End portion thickness [mm] | 0.17 | 0.14 | 0.26 |
| | Angle formed by boundary lines | 56° | 60° | 90° |
| | | 124° | 120° | 90° |
| Fiber-reinforcement composite material | Average thickness [mm] | 1.99 | 2 | 1.97 |
| | Thickness difference [mm] | 0.06 | 0.08 | 0.43 |
| | Surface appearance | Uniform surface (no missing resin or fibers) | Uniform surface (no missing resin or fibers) | Missing resin or fibers |
| | 0° bending strength [GPa] | 1,830 | 1,880 | 1,720 |
| | 0° bending elastic modulus [GPa] | 128 | 129 | 125 |
| | 0° bending elongation [%] | 1.53 | 1.6 | 1.54 |

### <Reference Example 1>

A tape prepreg having a parallelogram cross-section was prepared by the same procedure as in Example 1 except that, after setting the position of the score cutter at an angle of 60° with respect to the base (bottom surface) of the cross-section of the prepreg for a fiber-reinforcement composite material and carrying out slitting, a groove roll was not used. After measuring the width and thickness, the fiber-reinforcement composite material was evaluated in the same manner as in Example 1 after tape placement and autoclave molding. Table 2 shows the expected results.

**[Table 2]**

| | | Reference Example 1 |
|---|---|---|
| Tape prepreg | Cross-section shape | Parallelogram |
| | Maximum width (mm) | 6.61 |
| | Minimum width (mm) | 6.27 |
| | Average width (mm) | 6.33 |
| | Central portion thickness (mm) | 0.25 |
| | End portion thickness (mm) | 0.16 |
| | Angle formed by boundary lines | 60° |
| | | 120° |
| Fiber-reinforcement composite material | Average thickness (mm) | 2.05 |
| | Thickness difference (mm) | 0.51 |
| | Surface appearance | Voids are rarely seen |

As is clear from the above results, the thickness precision, appearance, and mechanical strength of the fiber-reinforcement composite material were excellent in the Examples having a portion in which the thickness of the cross-section of the reinforcing fiber bundle of the tape prepreg perpendicular to the orientation direction continuously increased from the end portions in the width direction toward the center direction in the width direction, in which the upper side and the lower side of the perpendicular cross-section had linear portions parallel to each other and the linear portions included the central position.

On the other hand, in Comparative Example 1 in which the shape of the perpendicular cross-section was substantially rectangular, a portion lacking fibers and resin was seen on the surface of the fiber-reinforcement composite material and that portion was a dent. Furthermore, in the results, the mechanical strength was also inferior. In the case of the parallelogram of Reference Example 1, voids may potentially occur in an inner portion in a case where the second tape is overlapped and disposed on the side where the side surface is exposed in the mold direction (the side where the base and hypotenuse of the prepreg form an obtuse angle on the adhesive surface side between the mold and the prepreg) and the pressure was not sufficient.

### [Industrial Applicability]

It is possible to suitably use the tape prepreg for a fiber-reinforcement composite material and the fiber-reinforcement composite material obtained from the tape prepreg of the present invention in aircraft members, automobile members, bicycle members, sporting goods members, railway vehicle members, ship members, building members, oil risers, and the like, in particular, suitable use is possible for aircraft members, automobile members, and bicycle members, for which there is a demand for high heat resistance and mechanical properties.

### [Reference Signs List]

### 1 Tape prepreg

### 1a Lower side (surface including lower side)

1b Upper side (surface including upper side)
2 Tape prepreg
2a Lower side (surface including lower side)
2b Upper side (surface including upper side)
4 Groove portion
5 Groove roll
S1 Width
S2 Width
W Mold
Wa Upper surface
T1 Straight line connecting endmost portion of prepreg and apex of convex portion protruding in direction opposite to most central part of prepreg among irregularities of boundary line in prepreg width direction
T2 Straight line connecting endmost portion of prepreg and apex of convex portion protruding in direction opposite to most central part of prepreg among irregularities of boundary line in prepreg thickness direction

## Claims

1. A tape prepreg formed by impregnating, with a resin, a reinforcing fiber bundle in which reinforcing fibers are aligned in one direction,
wherein a cross-section of the tape prepreg perpendicular to an orientation direction has a portion in which a thickness continuously increases from one end portion and the other end portion in a width direction toward the center in the width direction, and
all angles formed by any one boundary line in a thickness direction of the perpendicular cross-section and a boundary line in the width direction are acute angles.

2. The tape prepreg according to Claim 1,
wherein at least a part of an upper side and a lower side, which are boundary lines of the perpendicular cross-section in the thickness direction, has linear portions parallel to each other, and the acute angle is 40° to 85°.

3. The tape prepreg according to Claim 1 or 2,
wherein the resin has a viscosity of 30,000 Pa·s or more.

4. The tape prepreg according to Claim 1,
wherein the perpendicular cross-section has a trapezoidal shape or a dome shape.

5. The tape prepreg according to Claim 1 or 2,
wherein the reinforcing fiber bundle is a carbon fiber bundle.

6. The tape prepreg according to any one of Claims 1 to 3,
wherein the resin includes an epoxy resin.

7. A fiber-reinforcement composite material formed by heating and curing the tape prepreg according to any one of Claims 1 to 4.

8. A fiber-reinforcement composite material manufacturing method comprising:
disposing a plurality of the tape prepregs according to any one of Claims 1 to 4 so as to be adjacent to each other by aligning orientation directions of the reinforcing fiber bundles, and
heating and pressing the disposed tape prepregs,
wherein, during the disposition, an end portion of a first tape prepreg in a width direction and an end portion of a second tape prepreg in a width direction are disposed so as to overlap each other when viewed in a thickness direction.

9. A tape prepreg formed by impregnating, with a resin, a reinforcing fiber bundle in which reinforcing fibers are aligned in one direction,
wherein a cross-section of the tape prepreg perpendicular to an orientation direction has a portion in which a thickness continuously increases from one end portion and the other end portion in a width direction toward the center in the width direction, and
the tape prepreg includes a release sheet.

10. The tape prepreg according to Claim 9,
wherein lengths of an upper side and a lower side of the perpendicular cross-section are different, and
the release sheet is disposed on a tape prepreg surface on a side of a shorter side.

11. A method for disposing a tape prepreg formed by impregnating, with a resin, a reinforcing fiber bundle in which reinforcing fibers are aligned in one direction,
wherein a cross-section of the tape prepreg perpendicular to the orientation direction of the reinforcing fiber bundle has a portion in which a thickness continuously increases from one end portion and the other end portion in a width direction toward the center in the width direction, and
the tape prepreg is heated and disposed in a mold.

12. The tape prepreg disposition method according to Claim 11,
wherein a plurality of the tape prepregs are disposed so as to be adjacent to each other by aligning an orientation direction of the reinforcing fiber bundles, and, during the disposition, at least a part of the first tape prepreg and at least a part of the second tape prepreg are disposed so as to overlap.

13. The tape prepreg disposition method according to Claim 12,
wherein at least a part of a portion in which a thickness of the first tape prepreg continuously increases and at least a part of a portion in which a thickness of the second tape prepreg continuously increases are disposed so as to overlap.

14. A fiber-reinforcement composite material manufacturing method using a tape prepreg formed by impregnating, with a resin, a reinforcing fiber bundle in which reinforcing fibers are aligned in one direction,
wherein a cross-section of the tape prepreg perpendicular to the orientation direction of the reinforcing fiber bundle has a portion in which a thickness continuously increases from one end portion and the other end portion in a width direction toward the center in the width direction, and
the tape prepreg is heated and disposed in a mold.
